# EUROPEAN PATENT APPLICATION

(11) **EP 3 820 189 A1**
(43) Date of publication of application: **12.05.2021**
(21) Application number: 19850138.9
(22) Date of filing: 09.08.2019
(51) Int. Cl.: H04W 24/04, H04W 76/18

(54) **COMMUNICATION METHOD AND COMMUNICATION DEVICE**

(30) Priority: 11.08.2018 CN 201810958271
(71) Applicant: Huawei Technologies Co., Ltd., Longgang Shenzhen, Guangdong 518129 (CN)
(72) Inventor: LI, You, Shenzhen, Guangdong 518129 (CN); ZHU, Yuanping, Shenzhen, Guangdong 518129 (CN); YUAN, Shitong, Shenzhen, Guangdong 518129 (CN); LIU, Jing, Shenzhen, Guangdong 518129 (CN); DAI, Mingzeng, Shenzhen, Guangdong 518129 (CN)
(74) Representative: Gill Jennings & Every LLP
(86) International application number: PCT/CN2019/100044
(87) International publication number: WO 2020/034909

(57) **Abstract**

This application provides a communication method and a communications apparatus. A first entity buffers data, so that a packet loss caused by backhaul link switching or a radio link failure can be avoided as much as possible. The communication method is applied to a relay system. The relay system includes a first node, a source node, and a target node, and the source node provides a service for the first node. The method includes: determining, by the first node, to be handed over from the source node to the target node; and storing, by the first node, data buffered in at least one first entity, where the first entity is a radio link control RLC entity or an adaptation layer entity.

## Description

This application claims priority to Chinese Patent Application No. 201810958271.6, filed with the China National Intellectual Property Administration on August 11, 2018 and entitled "COMMUNICATION METHOD AND COMMUNICATIONS APPARATUS", which is incorporated herein by reference in its entirety.

### TECHNICAL FIELD

This application relates to the communications field, and more specifically, to a communication method and a communications apparatus.

### BACKGROUND

In a long term evolution (LTE) system, a relay node is mainly used to implement extended coverage or blind spot coverage, or is used to increase a system capacity. In a 5th generation mobile networks or 5th generation wireless systems (5G), the relay node is also referred to as an integrated access and backhaul (IAB) node, and the IAB node is mainly used to enhance coverage and increase the system capacity in the 5G system.

In 5G, an IAB system supports a multi-hop wireless relay scenario and a multi-connection scenario. The multi-connection scenario supported by the IAB system means that one relay node can be connected to a plurality of upper-level nodes. The IAB system also supports the multi-hop wireless relay scenario.

Because a relay system implements backhaul wirelessly, in the IAB system supporting multi-hop, when a wireless backhaul link changes, a backhaul link of an IAB node may be interrupted. How to resolve a problem caused by a backhaul link interruption is an urgent problem to be resolved for implementing a high-quality IAB system.

### SUMMARY

This application provides a communication method, to avoid, as much as possible, a packet loss caused by backhaul link switching.

According to a first aspect, a communication method is provided. The method is applied to a relay system, the relay system includes a first node, a source node, and a target node, and the source node provides a service for the first node. The method includes: The first node determines to be handed over from the source node to the target node. The first node stores data buffered in at least one first entity. The first entity is a radio link control RLC entity or an adaptation layer entity.

Specifically, when determining to be handed over from the source node to the target node, for example, when receiving a handover command or detecting a radio link failure (radio link failure, RLF), the first node may store the data buffered in the at least one first entity, or the first node skips releasing the data buffered in the at least one first entity. The first entity is the radio link control (radio link control, RLC) entity or the adaptation layer entity. In this way, after being handed over to (or being connected to) the target node, the first node may send, to the target node, the data buffered in the at least one entity.

In the conventional technology, data buffered in a first entity may include data that is in data received by the first entity from a lower-level node and that is not sent to a source node. In this case, an operation of discarding the data buffered in the first entity causes a loss of the data that is not sent to the source node. Therefore, compared with the conventional technology, the communication method in this application can avoid, as much as possible, a packet loss caused by backhaul link switching.

Optionally, the data buffered in the first entity may be data (for example, an RLC service data unit (service data unit, SDU), an RLC SDU segment, and an RLC protocol data unit (protocol data unit, PDU)) that is in the data received by the first node from the lower-level node and that is not sent to the source node, or may be all of the data received by the first node from the lower-level node of the first entity.

It should be understood that the first entity may be specifically a transmit end of the first entity or a receive end of the first entity.

Optionally, the method further includes: when storing the data buffered in the at least one first entity, the first node may further store or reset a state variable, for example, a sequence number of the RLC SDU, of the at least one first entity.

With reference to the first aspect, in some implementations of the first aspect, that the first node determines that a parent node of the first node is to be handed over from the source node to the target node includes: When receiving a handover command or detecting a radio link failure RLF, the first node determines that the parent node of the first node is to be handed over from the source node to the target node. The handover command is used to indicate the first node to be handed over to the target node.

With reference to the first aspect, in some implementations of the first aspect, the method further includes: The first node re-establishes, resets, or releases a lower-layer protocol entity of the first entity. The lower-layer protocol entity may be media access control (media access control, MAC).

With reference to the first aspect, in some implementations of the first aspect, before the first node stores the data buffered in the at least one first entity, the method further includes: The first node receives indication information. The indication information is used to indicate the first node to store the data buffered in the at least one first entity.

The indication information may be sent by a donor base station. However, this is not limited in this application.

According to a second aspect, a communication method is provided, including: A first node determines a triggering event. The triggering event is used by the first node to trigger a terminal device that performs data transmission through the first node to perform packet data convergence protocol (packet data convergence protocol, PDCP) data retransmission, the triggering event includes that the first node receives first indication information sent by an upper-level node, or the first node determines to be handed over from a source node to a target node, the first indication information is used to indicate at least one terminal device that accesses the first node to perform the PDCP data retransmission, the first indication information is radio resource control (radio resource control, RRC) signaling, adaptation layer signaling, or F1-AP control plane signaling, and the upper-level node includes a donor base station and an integrated access and backhaul IAB node.

The first node sends second indication information to the at least one terminal device that accesses the first node or a second node. The second indication information is used to indicate the at least one terminal device that accesses the first node or the terminal device that accesses the second node to perform the PDCP data retransmission, and the second node is a lower-level node of the first node.

Specifically, when determining that the triggering event occurs, the first node may send, by using the RRC signaling, the adaptation layer signaling, or the F1 control plane signaling, the second indication information to a terminal device that accesses the first node and that needs to perform the PDCP retransmission, to trigger the at least one terminal device to perform the PDCP data retransmission. Alternatively, when determining that the triggering event occurs, the first node may send, by using the adaptation layer signaling, the second indication information to the lower-level node of the first node, so that the lower-level node triggers the at least one terminal device to perform the PDCP data retransmission.

Therefore, the communication method in this embodiment of this application helps recover data lost during backhaul link switching. Further, an upper-level node that accesses the terminal device sends, through a backhaul link, signaling to a node that accesses the terminal device. This avoids directly transmitting signaling on the backhaul link for each radio bearer of each terminal device, thereby reducing signaling overheads.

It should be understood that F1 is an interface between a centralized unit (centralized unit, CU) and a distributed unit (distributed unit, DU).

With reference to the second aspect, in some implementations of the second aspect, the method further includes: The first node receives retransmitted data that is from the terminal device that accesses the first node or the terminal device that accesses the second node.

Therefore, the data lost during the backhaul link switching can be recovered by performing data retransmission by the terminal device.

With reference to the second aspect, in some implementations of the second aspect, the second indication information is sent by using a packet data convergence protocol PDCP control protocol data unit PDU, a radio link control RLC control PDU, an RLC data PDU, a media access control control element media access control control element (media access control control element, MAC CE), or adaptation layer signaling.

With reference to the second aspect, in some implementation of the second aspect, the first indication information includes at least one of the following information:
an identifier of the at least one terminal device;
an identifier of at least one radio bearer of the at least one terminal device;
at least one quality of service (quality of service, QoS) flow identifier or QoS identifier of the at least one terminal device;
an identifier of the first node;
an indication of the PDCP data retransmission; and
an identifier of the lower-level node of the first node.

According to a third aspect, a communication method is provided. The method includes: A donor base station receives a radio link failure notification of one or more third nodes. The third node is an upper-level node of a first node.

The donor base station determines at least one node device that accesses a network through the first node. The node device includes at least one of a terminal device that accesses the first node or a second node, and the second node is a lower-level node of the first node.

The donor base station sends first indication information to the at least one node device. The first indication information is used by the terminal device that accesses the first node or the terminal device that accesses the second node to perform PDCP data retransmission, and the first indication information is radio resource control RRC signaling, adaptation layer signaling, or F1-AP control plane signaling.

With reference to the third aspect, in some implementations of the third aspect, the method further includes:

The donor base station receives retransmitted data that is from the terminal device that accesses the first node or the terminal device that accesses the second node.

With reference to the third aspect, in some implementations of the third aspect, the at least one node device that accesses the network through the first node includes a node device that accesses the network through the first node after multi-hop transmission.

With reference to the third aspect, in some implementations of the third aspect, the first indication information is sent by the donor base station to the first node, and the first node sends an indication of the PDCP data retransmission to the terminal device that accesses the first node.

With reference to the third aspect, in some implementations of the third aspect, the first indication information is sent by the donor base station to the second node, and the second node sends the indication of the PDCP data retransmission to the terminal device that accesses the second node.

With reference to the third aspect, in some implementations of the third aspect, the first indication information is sent by the donor base station to the terminal device that accesses the first node or the second node, and the first indication information is used to indicate the terminal device that accesses the first node or the terminal device that accesses the second node to perform the PDCP data retransmission.

With reference to the third aspect, in some implementation of the third aspect, the first indication information includes at least one of the following information:
identifier of the at least one terminal device;
identifier of at least one radio bearer of the at least one terminal device;
at least one quality of service QoS flow identifier or QoS identifier of the at least one terminal device;
an identifier of the first node;
an identifier of the second node; or
the indication of the PDCP data retransmission.

According to a fourth aspect, a communication method is provided, including: When a quantity of radio link control RLC retransmissions reaches a maximum value, a terminal device determines whether a radio link failure RLF occurs on an access link. When no RLF occurs on the access link, the terminal device skips reporting, to an upper layer, that the quantity of RLC retransmissions reaches the maximum value.

According to the method in this embodiment of this application, when no RLF occurs on the access link, even if the quantity of RLC retransmissions reaches the maximum value, the terminal device does not report, to the upper layer, that the quantity of RLC retransmissions reaches the maximum value, so that an invalid RLF can be avoided.

With reference to the fourth aspect, in some implementations of the fourth aspect, that the terminal device determines whether the radio link failure RLF occurs on the access link includes: The terminal device receives indication information. The indication information is used to indicate that the RLF occurs on a backhaul link or a backhaul link changes. The terminal device determines, based on the indication information, that no RLF occurs on the access link.

According to a fifth aspect, a communications apparatus is provided. The communications apparatus includes a unit configured to perform any one of the first aspect or possible implementations of the first aspect. The unit included in the communications apparatus may be implemented by software and/or hardware.

According to a sixth aspect, a communications apparatus is provided. The communications apparatus includes a unit configured to perform any one of the second aspect or possible implementations of the second aspect. The unit included in the communications apparatus may be implemented by software and/or hardware.

According to a seventh aspect, a communications apparatus is provided. The communications apparatus includes a unit configured to perform any one of the third aspect or possible implementations of the third aspect. A unit of the method in the implementations. The unit included in the communications apparatus may be implemented by software and/or hardware.

According to an eighth aspect, a communications apparatus is provided. The communications apparatus includes a unit configured to perform any one of the fourth aspect or possible implementations of the fourth aspect. The unit included in the communications apparatus may be implemented by software and/or hardware.

According to a ninth aspect, a communications device is provided, including a processor and a memory. The memory is configured to store a computer program, and the processor is configured to invoke and run the computer program from the memory, so that the apparatus performs the method in any one of the first aspect to the fourth aspect or possible implementations of the first aspect to the fourth aspect.

Optionally, there are one or more processors and one or more memories.

Optionally, the memory may be integrated with the processor, or the memory and the processor are separately disposed.

Optionally, the communications device further includes a transceiver or a transceiver circuit, configured to complete information receiving and sending functions.

According to a tenth aspect, this application provides a computer-readable storage medium. The computer-readable storage medium stores a computer program. When the computer program is executed, the method in any one of the first aspect to the fourth aspect or possible implementations of the first aspect to the fourth aspect is implemented.

According to an eleventh aspect, this application provides a computer program product including a computer program. When the computer program is run, the method in any one of the first aspect to the fourth aspect or possible implementations of the first aspect to the fourth aspect is implemented.

According to a twelfth aspect, this application provides a chip system. The chip system includes an input/output interface and at least one processor, and the at least one processor is configured to invoke an instruction in a memory, to perform operations of the method in any one of the first aspect to the fourth aspect or possible implementations of the first aspect to the fourth aspect.

Optionally, the system chip may further include at least one memory and a bus, and the at least one memory is configured to store the instruction executed by the processor.

Optionally, the input/output interface is implemented in a manner of an interface circuit.

### BRIEF DESCRIPTION OF DRAWINGS

FIG. 1 is a schematic diagram of an application scenario of a method and apparatuses according to an embodiment of this application;
FIG. 2 is a schematic diagram of protocol stack deployment;
FIG. 3 is a schematic diagram of protocol stack deployment;
FIG. 4 is a schematic diagram of another application scenario of a method and apparatuses according to an embodiment of this application;
FIG. 5 is a schematic flowchart of a method according to another embodiment of this application;
FIG. 6 is a schematic flowchart of a method according to another embodiment of this application;
FIG. 7 is a schematic flowchart of a method according to another embodiment of this application;
FIG. 8 is a schematic flowchart of a method according to another embodiment of this application;
FIG. 9 is a schematic flowchart of a method according to another embodiment of this application;
FIG. 10 is a schematic structural diagram of a communications apparatus according to this application;
FIG. 11 is a schematic structural diagram of another communications apparatus according to this application;
FIG. 12 is a schematic structural diagram of a communications apparatus according to this application;
FIG. 13 is a schematic structural diagram of another communications apparatus according to this application; and
FIG. 14 is a schematic structural diagram of another communications apparatus according to this application.

### DESCRIPTION OF EMBODIMENTS

The following describes technical solutions in this application with reference to the accompanying drawings.

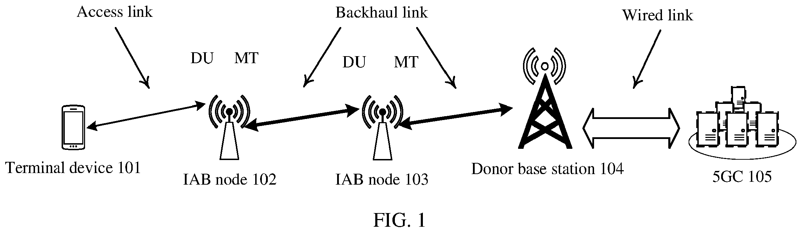

FIG. 1 is a schematic diagram of a multi-hop networking scenario in an IAB network. A definition manner of multi-hop is as follows: Data transmission between a terminal device and a donor next generation NodeB (DgNB) is referred to as two hops if the data transmission passes through two relay nodes (RN), and is referred to as three hops if the data transmission passes through three RNs, and so on.

As shown in FIG. 1, the IAB network includes a terminal device 101, an IAB node 102, an IAB node 103, a donor base station 104, and a 5G core (5GC) network 105. The IAB node 102 is an access node of the terminal device 101, and may provide a wireless access service for the terminal device 101. A radio link between the IAB node 102 and the terminal device 101 is referred to as an access link (AC). The IAB node 103 is located between the IAB node 102 and the donor base station 104, and may be referred to as an intermediate (IAB) node. A radio link between the IAB node 102 and the IAB node 103 is referred to as a backhaul link (BH) or a wireless backhaul link. The IAB node 103 is connected to the donor base station 104 through the backhaul link to transmit service data of the terminal device 101, and a radio link between the IAB node 103 and the donor base station 104 is the backhaul link. The donor base station 104 may be a complete entity, or may be a form in which a centralized unit (CU) and a distributed unit (DU) are separated. The donor base station is connected to the 5G core network 105 through a wired link.

Each IAB node considers a node that provides a backhaul service for the IAB node as an upper-level node (or referred to as a parent node). Correspondingly, the IAB node may be considered as a lower-level node (or referred to as a child node) of the upper-level node of the IAB node. For example, the IAB node 103 is an upper-level node of the IAB node 102, and the IAB node 102 is a lower-level node of the IAB node 103. The donor base station 104 is an upper-level node of the IAB node 103, and the IAB node 103 is a lower-level node of the donor base station 104. In this application, the lower-level node is also referred to as a second node. It should be understood that the second node is a lower-level node in a broad sense.

In addition, in a broad sense, the donor base station 104 is also an upper-level node of the IAB node 102, and the IAB node 102 is a lower-level node of the donor base station 104.

Further, as shown in FIG. 1, a function on an interface between an IAB node and an upper-level node is different from a function on an interface between the IAB node and a lower-level node.

Apart/function of the IAB node that accesses the upper-level node is referred to as a mobile termination (MT). The part may execute a function similar to that of a terminal device in an NR, for example, select an upper-level node through measurement, or perform a radio resource control (RRC) connection establishment process to establish a connection to the upper-level node, and perform RRC measurement to obtain quality of a link between the part and the upper-level node. The donor base station 104 may configure and manage the MT by using RRC signaling.

A part/function that is of the IAB node and that provides access for a lower-level IAB node or the terminal device is referred to as a distributed unit (DU). The part executes a function similar to that of an NR DU. The donor base station 104 may configure and manage a DU part of the IAB node by using F1-AP (application) signaling.

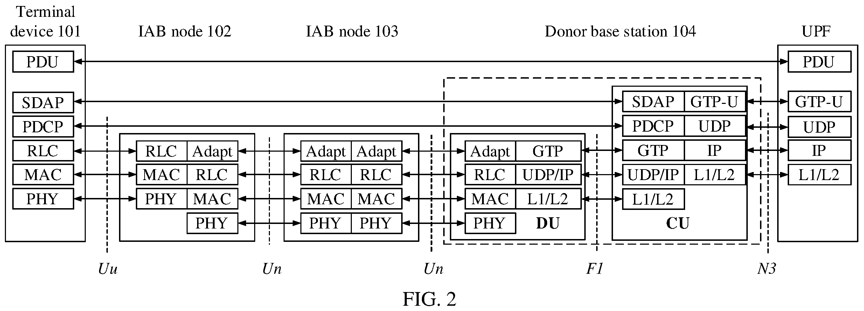

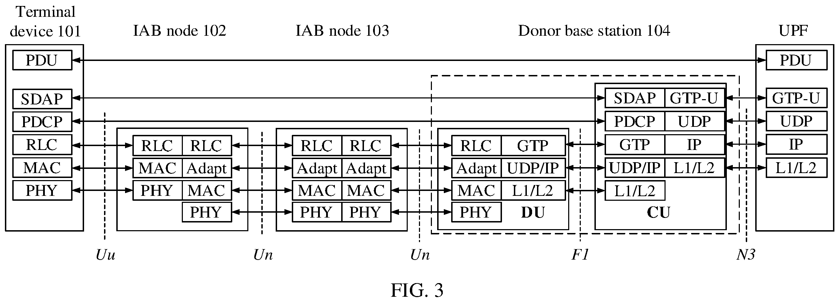

With reference to FIG. 2 and FIG. 3, protocol stack deployment on each node shown in FIG. 1 is briefly described.

Referring to FIG. 2 and FIG. 3, an interface between a terminal device and an IAB node is Uu, an interface between IAB nodes is Un, an interface between an IAB node and a donor base station is F1, and an interface between a donor base station and a user plane function (UPF) is N3. It should be understood that the interface names listed herein are merely examples for description, and the interface names are not limited in this application.

Referring to FIG. 2 and FIG. 3, a 1a architecture is introduced into a user plane protocol stack, and the IAB node is used as a DU corresponding to the donor base station or a CU to provide a service for the terminal device. Main ideas of the architecture are as follows:
(1) Backhaul is provided for F1-U (F1-User plane, data plane between the CU and the DU) only by using an adaptation layer (adapt), or by using a general packet radio protocol (GPRS) tunneling protocol for user plane (GTP-U) in combination with an adaptation layer.
(2) Hop-by-hop data forwarding between IAB nodes is provided by using the adaptation layer.

In the 1a architecture, a packet data convergence protocol (PDCP) of the terminal device is deployed on the donor base station or the CU of the donor base station, and the adaptation layer is deployed in the following two manners:
Manner 1: Above-RLC deployment, to be specific, the adaptation layer is deployed above a radio link control (RLC) layer.
Manner 2: Above-MAC deployment, to be specific, the adaptation layer is deployed above (between a MAC (MAC) layer and the RLC layer) the medium access control layer.

The adaptation layer may be an independent protocol layer, or may be a sublayer or a submodule of an existing protocol layer. For example, the adaptation layer may be a sublayer of the RLC layer or a sublayer of the MAC layer.

Corresponding to different adaptation layer deployment manners, if an acknowledged mode (AM) is configured at the RLC layer, an end-to-end automatic repeat request (ARQ) and a hop-by-hop ARQ may be further distinguished.

### 1. Hop-by-hop ARQ

Each RLC entity of each node on an access link and a backhaul link maintains variables, timers, and the like (of a receive window and a transmit window) required by the RLC layer.

An RLC entity of a node of each hop can detect whether a packet loss occurs and trigger RLC retransmission of a current link.

The RLC entity of the node of each hop can perform segmentation or reassembly of an RLC service data unit (SDU). The RLC SDU in this application is a data packet that is received by the RLC and that is from an upper layer. An RLC protocol data unit (PDU) is a data packet processed at the RLC layer. For example, an RLC header is added. Alternatively, the RLC protocol data unit is a data packet in which an RLC header is added after segmentation is performed at the RLC layer. A data packet of another layer is similar to this. For example, a PDCP SDU is a data packet that is received by a PDCP layer and that is from an upper layer, and a PDCP PDU is a data packet processed at the PDCP layer. Details are not described below.

When the adaptation layer is deployed above the RLC layer, because the RLC entity on the backhaul link is multiplexed by radio bearers of a plurality of terminal device, and the RLC entity on the access link is specific to the terminal device; in other words, granularities processed on the access link and the backhaul link are different, the hop-by-hop ARQ may be considered to avoid inter-hop coordination.

### 2. End-to-end ARQ

An RLC entity of an end node, for example, the terminal device and the donor base station, that is only on a path maintains variables, timers, and the like (of a receive window and a transmit window) required by the RLC layer.

Retransmission management is performed on the RLC entity of the end node: If a packet loss occurs on any link, the end node detects the packet loss and triggers retransmission. Data is transmitted, through multi-hop, from an RLC entity at a transmit end to an RLC entity at a receive end.

Optionally, an RLC entity/function of an intermediate IAB node may perform segmentation or re-segmentation of the RLC SDU to adapt to link quality. Optionally, the RLC entity/function of the intermediate IAB node only needs to forward data.

When the adaptation layer is deployed above the MAC layer, because the RLC entity on the backhaul link is specific to a radio bearer of each terminal device, the end-to-end ARQ may be configured to reduce a latency.

It should be understood that, for specific functions of protocol layers such as a service data adaptation protocol (SDAP) layer, a physical (PHY) layer, a tunneling protocol (GTP) layer, a user datagram protocol (UDP)/internet protocol (IP) layer, a UDP layer, an IP layer, and a layer 1 (L1)/layer 2 (L2) in FIG. 2 and FIG. 3, refer to the conventional technology. Details are not described in this application.

In an IAB network, quality of the backhaul link can change. If the quality of the backhaul link deteriorates, a handover operation of a relay node or a radio link failure (radio link failure, RLF) recovery operation may be triggered, to reselect a new backhaul link.

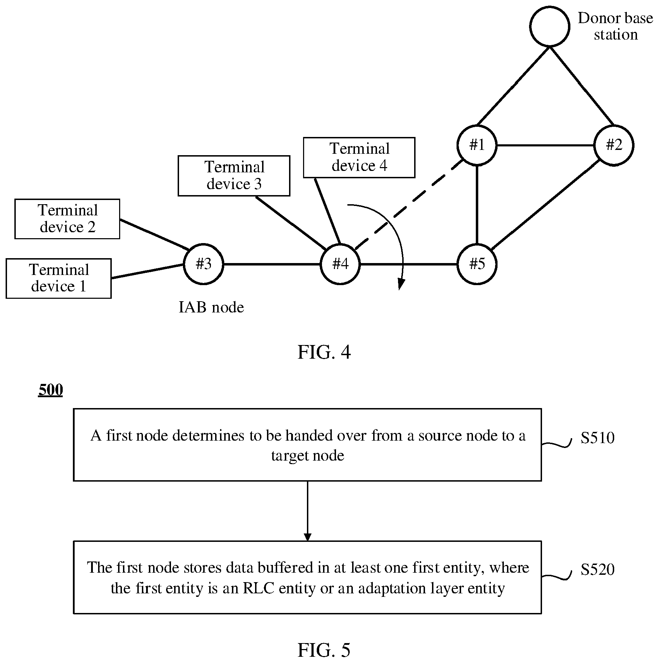

For ease of understanding, a communications system shown in FIG. 4 is used as an example for description. As shown in FIG. 4, the system may include a terminal device 1, an IAB node 1 to an IAB node 5, and a donor base station. Optionally, the system may further include one or more of a terminal device 2, a terminal device 3, and a terminal device 4.

Before the IAB node 4 switches a backhaul link, the IAB node 1 provides a backhaul service for the IAB node 4. If quality of the backhaul link between the IAB node 1 and the IAB node 4 deteriorates, the donor base station or the IAB node 1 may trigger the IAB node 4 to switch the backhaul link. For example, the IAB node 1 may be replaced by the IAB node 5 to provide the backhaul service for the IAB node 4. Alternatively, if the IAB node 4 detects that an RLF occurs on the backhaul link between the IAB node 4 and the IAB node 1, the IAB node 4 may perform an RLF recovery operation, for example, may establish a backhaul link between the IAB node 4 and the IAB node 5.

However, when the IAB node 4 performs an operation such as backhaul link switching or the RLF, if the operation is performed according to a conventional method, a packet loss is caused. For example, the IAB node 4 may discard a data packet (for example, an RLC protocol data unit (protocol data unit, PDU), an RLC SDU, or an RLC SDU segment) buffered in an RLC entity, thereby causing data damage. Therefore, it is an urgent technical problem to avoid, as much as possible, the packet loss caused by the operation such as the backhaul link switching or the RLF, or to recover data when the packet loss occurs.

To resolve this problem, this application provides a communication method. The method may be applied to a relay system, and the relay system may include a first node, a source node, and a target node. For example, the method is applied to a network topology shown in FIG. 5. The first node may be the IAB node 4, the source node may be the IAB node 1, and the target node may be the IAB node 5.

The communication method provided in this application includes: The first node determines to be handed over from the source node to the target node. The first node stores data buffered in at least one first entity. The first entity is a radio link control RLC entity or an adaptation layer entity.

In some possible implementations, that the first node determines that a parent node of the first node switches from the source node to the target node includes:

When receiving a handover command or detecting a radio link failure RLF, the first node determines that the parent node of the first node switches from the source node to the target node. The handover command is used to indicate the first node switches to the target node.

In some possible implementations, the method further includes: The first node re-establishes, resets, or releases a lower-layer protocol entity of the first entity.

It should be understood that this application may be further applied to another communications system, for example, a global system for mobile communications (GSM), a code division multiple access (CDMA) system, a wideband code division multiple access (WCDMA) system, a general packet radio service (GPRS), a long term evolution (LTE) system, an LTE frequency division duplex (FDD) system, an LTE time division duplex (TDD) system, a universal mobile telecommunications system (UMTS), a worldwide interoperability for microwave access (WiMAX) communications system, a 5G mobile communication system, or a 5G new radio (NR) communications system.

In the embodiments of this application, the donor base station may be a device configured to communicate with a mobile station, and may be specifically any one of an access point (AP) in a wireless local area network (WLAN), a base transceiver station (BTS) in the GSM system or the CDMA system, a NodeB (NB) in the WCDMA system, an evolved NodeB (eNB) in the LTE system, a relay station or an access point, a vehicle-mounted device, a wearable device, an access network device in a future 5G network, an access network device in a future evolved public land mobile network (PLMN), and the like.

The terminal device in the embodiments of this application may be user equipment (UE), an access terminal, a user unit, a user station, a mobile station, a remote station, a remote terminal, a mobile device, a terminal, a wireless communications device, a user agent, a user apparatus, or the like. The terminal device may be specifically any one of a station (ST) in the WLAN, a cellular phone, a cordless phone, a session initiation protocol (SIP) telephone, a wireless local loop (WLL) station, a personal digital assistant (PDA), a handheld device with a wireless communication function, a computing device, another processing device connected to a wireless modem, a vehicle-mounted device, a wearable device, a mobile station in the future 5G network, a terminal device in the future evolved PLMN network, and the like.

The following describes in detail the communication method provided in this application.

FIG. 5 is a schematic flowchart of a communication method 500 according to an embodiment of this application. It should be understood that this application may be applied to an end-to-end ARQ scenario, or may be applied to a hop-by-hop ARQ scenario. In addition, this application may be applied to a scenario in which an adaptation layer is deployed above an RLC layer, or may be applied to a scenario in which an adaptation layer is deployed above a MAC layer or an adaptation layer is used as a sublayer of the MAC layer.

S510: A first node determines to be handed over from a source node to a target node.

There are at least two possibilities for the first node to determine that the first node needs to be handed over from the source node to the target node. One is that the first node is handed over from the source node to the target node based on a network indication, and correspondingly, backhaul link switching occurs. The other is that because link quality cannot meet a service requirement, for example, when the first node detects an RLF, the first node determines that the target node needs to be accessed through cell selection or cell reselection, and correspondingly, a backhaul link changes.

The first node determines, based on the network indication, that the first node needs to be handed over from the source node to the target node, where the network indication is an indication received from a donor base station or an indication received from the source node. The first node determines that the first node needs to be handed over from the source node to the target node. For example, because a capacity of the source node cannot meet a link quality requirement of the first node, or because a link failure occurs on the backhaul link of the source node, or because of another reason, the source node actively requests the first node to perform a handover to better meet the service requirement of the first node. Usually, the source node or the donor base station controls, by using a handover command, for example, synchronous reconfiguration (ReconfigurationwithSync) in RRC signaling, the first node to be handed over to the target node. Alternatively, the donor base station may directly control the first node to be handed over to a target node. For example, the donor base station controls, by using an F1-AP interface, the first node to be handed over to a target node.

If the first node detects the RLF or detects that the source node cannot meet a communication requirement, for example, a transmission rate is lower than a threshold, the first node may actively initiate a node reselection process.

S520: The first node stores data buffered in at least one first entity. Specifically, when determining to be handed over from the source node to the target node, for example, when receiving the handover command or detecting the RLF, the first node may store the data buffered in the at least one first entity, or the first node skips releasing the data buffered in the at least one first entity. The first entity is an RLC entity or an adaptation layer entity. In this way, after being handed over to (or being connected to) the target node, the first node may send, to the target node, the data buffered in the at least one entity. For example, the RLC entity stores data in a buffer. The stored data may be an RLC SDU, an RLC SDU segment, or an RLC PDU.

In the conventional technology, data buffered in a first entity may include data that is in data received by the first entity from a lower-level node and that is not sent to a source node. In this case, an operation of discarding the data buffered in the first entity causes a loss of the data that is not sent to the source node. Therefore, compared with the conventional technology, the communication method in this application can avoid, as much as possible, a packet loss caused by backhaul link switching or change.

It should be understood that data buffered in the first node includes data of a terminal device served by the first node, or a terminal device served by a lower-level node of the first node, or even all terminal devices that perform data forwarding through the first node.

Optionally, in an embodiment of this application, S520 may be performed after the first node receives indication information. The indication information is used to indicate the first node to store the data buffered in the at least one first entity. The indication information may be sent by the donor base station. It should be understood that the indication information is not mandatory. If the first node receives the handover command, or determines to be handed over to the target node, or needs to be handed over to the target node due to a link reason, the first node determines, based on a buffer configuration status of an RLC layer or an adaptation layer of the first node whether S520 is to be performed. Specifically, if the adaptation layer is above the RLC layer, both the adaptation layer and the RLC layer may store buffered data; or only one of the layers has buffered data; to be specific, the adaptation layer or the RLC layer buffers data. If both the adaptation layer and the RLC layer store the buffered data, the first node may choose to retain the buffered data at one layer, or may retain the buffered data at both the layers. This is determined based on a protocol definition or implementation. This is not limited in this application. If only one of the adaptation layer and the RLC layer retains the buffered data, during the handover, the buffered data should not be reset or cleared. When the adaptation layer is below the RLC layer, the same choice is followed, and the buffered data at at least one layer is not cleared. Details are not described. It may be understood that the first node may further determine, based on a deployment manner of the adaptation layer, that the buffered data needs to be retained, so that the indication information is not needed. For example, when the adaptation layer is deployed above the MAC layer, the RLC entity is usually configured for a UE bearer (for example, an RLC entity that is in a one-to-one correspondence with the UE bearer is configured for the UE bearer on the backhaul link), and the buffered data needs to be retained. It may be understood that the first node may further determine, based on an ARQ configuration manner, that the buffered data needs to be retained, so that the indication information is not needed. For example, if an end-to-end ARQ is configured, the buffered data needs to be retained.

Optionally, the data buffered in the first entity may be data that is not sent to the source node in the buffer, or may be all data in the buffer. The data is received from the lower-level node or UE served by the first node.

It should be noted that in the method 500, the first node may include an MT and a DU, and the buffered data may include data of the MT or the DU. The data buffered in the DU may not be sent on the backhaul link, but also needs to be sent to an upper-level node. However, some data in the MT may already be transmitted, but no feedback (for example, a hop-by-hop ARQ feedback) from the upper-level node is received. In this case, data for which no feedback is received needs to be retransmitted, and data that is not transmitted needs to be transmitted.

It should be understood that the DU or the MT herein is merely to distinguish a function of the first node, to be specific, distinguish whether a data packet is generated by the first node or generated by a node served by the first node. The node served by the first node includes the terminal device or the lower-level node. When the DU or the MT is not distinguished for the first node, the first node is a node that supports a relay function.

The following describes an operation performed by the first node on a state variable in the at least one first entity and an operation performed by the target node. For ease of understanding, the following uses an example in which the first entity is an RLC entity for description.

It should be understood that the state variable in this application may be state variables that are maintained by the RLC entity and that are of a sending operation, a receiving operation, retransmission, and polling, for example, a sequence number TX_Next for next piece of data to be transmitted, or a quantity PDU_WITHOUT_POLL of PDUs that are not polled.

When receiving the handover command and the radio link failure, the first node may perform slightly different processing, which is separately described below.

The first node receives the handover command.

Operation 1: The first node may further store the state variable of the RLC entity while storing the data buffered in the RLC entity.

When the first node performs the handover, if the RLC entity does not maintain the state variable (for example, in the end-to-end ARQ scenario), the first node may not perform any processing on the state variable of the RLC entity. If the RLC entity needs to maintain the state variable (for example, in the hop-by-hop ARQ scenario), the first node may store or not release the state variable of the RLC entity.

In addition, the first node may further not release a timer related to the RLC entity, and the timer includes but is not limited to t-Reassembly related to SDU reassembly, t-PollRetransmit related to polling, and the like.

The target node may establish a corresponding RLC entity, and synchronize the state variable of the RLC entity, in other words, transit a complete RLC state of the source node to the target node.

For example, the target node may establish the RLC entity after receiving a radio bearer establishment command sent by the donor base station. The donor base station may send the radio bearer establishment command or a radio bearer re-establishment command by using F1-AP signaling. Specific signaling is not limited in this application.

The state variable may be sent by the donor base station to a target base station by using the F1-AP signaling, or may be sent by the source node to a target base station by using adaptation layer signaling. For a manner in which the state variable is sent by the donor base station to the target base station by using the F1-AP signaling, the donor base station needs to query the source node for the state variable, or the source node reports the state variable to the donor base station.

It should be understood that the foregoing is merely an example. Because there are many state variables, especially the variable related to the timer, and the state variables are difficult to control, the state variables may be simplified. For example, only a sequence number of a data packet in the buffer may be sent to the target base station. The sequence number may be for example a sequence number of the RLC SDU, or may be sequence numbers of all RLC SDUs, a smallest sequence number in sequence numbers of all RLC SDUs, or a largest sequence number in sequence numbers of all RLC SDUs.

Operation 2: The first node may reset the state variable of the RLC entity while storing the data buffered in the RLC entity.

Specifically, the first node may perform a reset operation on state variables of both a transmit end and a receive end of the RLC entity. Further, the first node may separately renumber data packets buffered by the transmit end and the receive end of the RLC entity, for example, may renumber the data packets from a preset initial value. Alternatively, the first node may renumber only data buffered by the transmit end of the RLC entity of the first node, and for the receive end of the RLC entity, the first node may deliver the buffered data to an upper layer.

The target node may establish a corresponding RLC entity, and initialize the state variable of the RLC entity. For how the target node establishes the corresponding RLC entity, refer to the foregoing description of related content. Details are not described herein again.

When establishing corresponding RLC entities, the target node may initialize state variables of receive ends and transmit ends of the RLC entities. Because the first node performs the reset operation on state variables of peer entities of the RLC entities, values of the state variables of receive ends of the RLC entities on the target node are the same as values of the state variables of transmit ends of the peer RLC entities on the first node, and values of the state variables of the transmit ends of the RLC entities on the target node are the same as values of the state variables of the receive ends of the peer RLC entities on the first node.

The first node detects the RLF.

The state variables may be synchronized through Operation 1 when the first node executes the handover command, or the data packets may be renumbered through Operation 2 when the first node executes the handover command. As described above, details are not described again.

Further, different from a case in which the first node performs the handover, because the first node retains at least one RLC entity or retains data buffered by at least one RLC entity, and the donor base station maintains radio bearer configuration information of the first node, after the first node accesses the target node, the donor base station may send bearer activation or reuse indication information to the first node, where the activation indication or reuse indication information includes an identifier of the at least one RLC entity (for example, an RLC bearer identifier or an RLC channel identifier) or a UE bearer identifier, to activate or reuse the at least one RLC entity.

Regardless of whether the first node receives the handover command or the first node detects the RLF, the source node releases a radio bearer corresponding to the at least one RLC entity. For example, the source node may release a corresponding radio bearer after receiving a radio bearer release command sent by the donor base station. The command may be, for example, F1-AP signaling. However, this is not limited in this embodiment of this application.

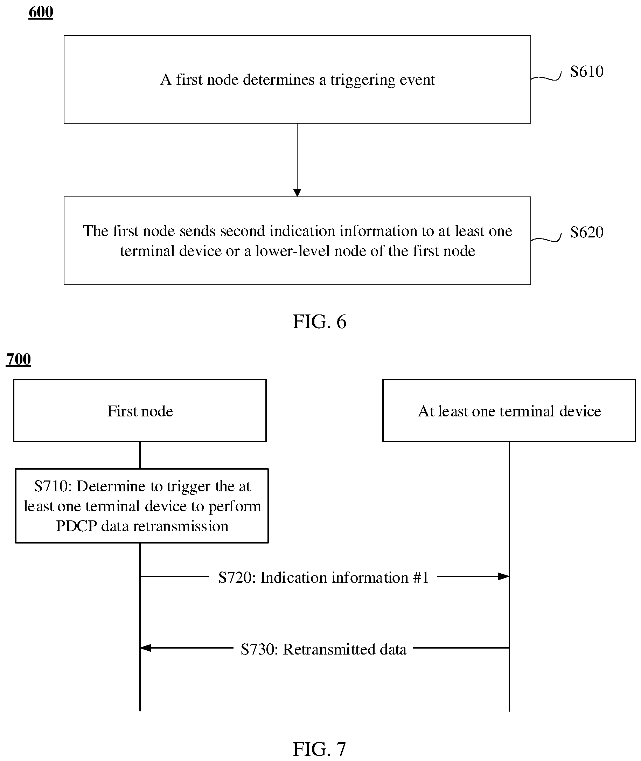

FIG. 6 is a schematic flowchart of a communication method 600 according to another embodiment of this application. It should be understood that this application may be applied to an end-to-end ARQ scenario, or may be applied to a hop-by-hop ARQ scenario. In addition, this application may be applied to a scenario in which an adaptation layer is deployed above RLC, or may be applied to a scenario in which an adaptation layer is deployed above MAC.

S610: A first node determines a triggering event.

The triggering event is used by the first node to trigger a terminal device that performs data transmission through the first node to perform PDCP data retransmission. The triggering event includes that the first node receives first indication information sent by an upper-level node, or the first node determines to be handed over from a source node to a target node. The first indication information is used to indicate a terminal device that accesses the first node to perform data retransmission, the first indication information is radio resource control RRC signaling, adaptation layer signaling, or F1 control plane signaling, and the upper-level node includes a donor base station and an integrated access and backhaul IAB node.

In a possible implementation, the donor base station receives a radio link failure notification of one or more third nodes. The third node is the upper-level node of the first node. The donor base station determines at least one node device that accesses a network through the first node. The node device includes at least one of the terminal device that accesses the first node or a second node, and the second node is a lower-level node of the first node. The donor base station sends the first indication information to the at least one node device. The first indication information is used by the terminal device that accesses the first node or the terminal device that accesses the second node to perform the PDCP data retransmission, and the first indication information is radio resource control RRC signaling, adaptation layer signaling, or F1-AP control plane signaling.

The at least one node device that accesses the network through the first node includes a node device that accesses the network through the first node after multi-hop transmission. The first indication information is sent by the donor base station to the first node, and the first node sends an indication of the PDCP data retransmission to the terminal device that accesses the first node. The first indication information may further be sent by the donor base station to the second node, and the second node sends the indication of the PDCP data retransmission to the terminal device that accesses the second node. The first indication information may further be sent by the donor base station to the terminal device that accesses the first node or the terminal device that accesses the second node, and first indication information is used to indicate the terminal device that accesses the first node or the terminal device that accesses the second node to perform the PDCP data retransmission.

It should be understood that in the foregoing possible implementation, the donor base station may directly control the terminal device which transmits data through the first node to perform data transmission in PDCP layer. Direct control means that the donor base station directly sends a control message to the terminal devices, so that the terminal devices perform the PDCP retransmission. The terminal devices not only include the terminal device that accesses the first node, but also include the second node.

In a possible implementation, the donor base station may alternatively send a control message, namely, the first indication information, to a relay node, instead of directly sending the control message to each terminal device that accesses the relay node, to reduce air interface signaling overheads. After receiving the first indication information of the donor base station, the relay node, for example, the first node or the second node, sends the indication of the PDCP data retransmission to all terminal devices that perform data forwarding through the first node, so that the terminal devices/terminal device that access/accesses the first node and/or the second node perform/performs the PDCP data retransmission.

It should be understood that the control message that is of the PDCP data retransmission and that is directly sent by the donor base station to the terminal device is slightly different from the control message that is of the PDCP data retransmission and that is sent by the relay node to the terminal device that accesses the relay node. Because the donor base station may directly control, by using an RRC message or PDCP control signaling, the terminal device to perform the PDCP retransmission, and the relay node may not support an RRC layer and/or a PDCP layer on a DU, the relay node cannot send the RRC message or the PDCP control signaling, and can notify, only by using adaptation layer control signaling, a MAC CE, or RLC control signaling, the terminal device that accesses the relay node to perform the PDCP retransmission.

For the foregoing implementation, for example, the donor base station may trigger, by using the RRC signaling, the adaptation layer signaling, or the F1-AP signaling, the at least one terminal device to perform the PDCP data retransmission when the donor base station receives handover complete signaling (for example, an RRC connection reconfiguration complete message) sent by the first node, or receives an RRC connection re-establishment complete message sent by the first node due to an RLF.

S620: The first node sends second indication information to the at least one terminal device or the lower-level node of the first node.

The first node sends the second indication information to at least one terminal device that accesses the first node or a terminal device that accesses the second node. The second indication information is used to indicate the terminal device that accesses the first node or the terminal device that accesses the second node to perform the PDCP data retransmission, and the second node is the lower-level node of the first node.

It should be understood that the second node is a lower-level node in a broad sense. In other words, the second node may be a relay node that accesses the network through the first node after multi-hop transmission.

It should be understood that, if the donor base station directly controls the terminal device to perform the PDCP data retransmission, content of the second indication information at least includes content of the first indication information. In this case, the first node transparently transmits the content of the first indication information to the terminal device that accesses the first node.

If the donor base station sends the control message to the first node or the second node, and the first indication information and the second indication information have different content, the first indication information mainly includes an identifier of the first node or the second node and the indication of the PDCP data retransmission. The first node and/or the second node further send/sends, based on the first indication information, the second indication information to the terminal device that accesses the first node or the second node. The second indication information indicates the terminal device that accesses the first node or the second node to perform the PDCP data retransmission. In this case, the second indication information includes at least one of an identifier of the terminal device, an identifier of at least one radio bearer of the terminal device, at least one quality of service QoS flow identifier or QoS identifier of the terminal device, and the identifier of the first node. It should be understood that not all bearers or data streams of a terminal device are transmitted through the first node. In this case, the PDCP data retransmission is used to indicate only bearers or data streams for which data transmission is performed through the first node.

Specifically, when determining that the triggering event occurs, the first node may send, by using the RRC signaling, the adaptation layer signaling, or the F1 control plane signaling, the second indication information to the terminal device that accesses the first node and that needs to perform the PDCP retransmission, to trigger the at least one terminal device to perform the PDCP data retransmission. Alternatively, when determining that the triggering event occurs, the first node may send, by using the adaptation layer signaling, the second indication information to the lower-level node of the first node, so that the lower-level node triggers the at least one terminal device to perform the PDCP data retransmission.

Therefore, the communication method in this embodiment of this application helps recover data lost during backhaul link switching. Further, an upper-level node that accesses the terminal device sends, through a backhaul link, signaling to a node that accesses the terminal device. This avoids directly transmitting signaling on the backhaul link for each radio bearer of each terminal device, thereby reducing signaling overheads.

In this application, the first node may determine that a radio bearer of UE that meets a specific QoS requirement performs the PDCP data retransmission. In this case, the first indication information includes a QoS identifier or a QoS parameter, for example, a latency or a transmission rate, corresponding to the specific QoS. The first indication information may further include at least one terminal and a QoS identifier or a QoS parameter of QoS corresponding to the terminal.

If the first indication information includes the QoS identifier or the QoS parameter, the second node may identify, based on the first indication information and pre-configured bearer mapping information or a QoS parameter of a bearer, the terminal device that needs to send the second indication information, a radio bearer of the terminal device, or a QoS flow of the terminal device.

Optionally, the second node may add the QoS identifier or the QoS parameter to the second indication information, so that the terminal identifies a corresponding radio bearer or QoS flow.

Optionally, the first indication information may include at least one of the following information:
an identifier of the at least one terminal device; an identifier of at least one radio bearer of the at least one terminal device; and at least one quality of service QoS flow identifier or QoS identifier of the at least one terminal device.

The identifier of the terminal device includes but is not limited to an international mobile subscriber identity (IMSI), a temporary mobile subscriber identity (TMSI), a cell radio network temporary identifier (C-RNTI), a MAC address, an IP address, and the like.

To make a person skilled in the art better understand this application, the following describes the first indication information in detail by using an example in which the at least one terminal device is a terminal device 1 and a terminal device 2.
(1) The terminal device 1 and the terminal device 2 are all terminal devices that access the second node, and all radio bearers of the terminal device 1 and the terminal device 2 need to perform the PDCP data retransmission.
   The first indication information may be a newly defined field, and the field may be 1 bit (bit). For example, when the bit is set to 1, it may indicate that all radio bearers of all terminal devices that access the second node need to be triggered to perform the PDCP data retransmission.
(2) The terminal device 1 and the terminal device 2 are some of terminal devices that access the second node, and all radio bearers of the terminal device 1 and the terminal device 2 need to perform the PDCP data retransmission.
   The first indication information may include an identifier of the terminal device 1 and an identifier of the terminal device 2.
(3) The terminal device 1 and the terminal device 2 are some of terminal devices that access the second node, and some of radio bearers of the terminal device 1 need to perform the PDCP data retransmission.

The first indication information may include an identifier of the terminal device 1 and identifiers of the some of radio bearers of the terminal device 1, or the first indication information may include an identifier of the terminal device 1 and QoS flow identifiers or QoS identifiers corresponding to the some of radio bearers of the terminal device 1.

If all radio bearers of the terminal device 2 need to perform the PDCP data retransmission, the first indication information may further include an identifier of the terminal device 2, or include an identifier of the terminal device 2 and identifiers of all radio bearers of the terminal device 2, or include an identifier of the terminal device 2 and QoS flow identifiers or QoS identifiers corresponding to all radio bearers of the terminal device 2. If some of radio bearers of the terminal device 2 need to perform the PDCP data retransmission, the first indication information may include an identifier of the terminal device 2 and identifiers of the some of radio bearers of the terminal device 2, or include an identifier of the terminal device 2 and QoS flow identifiers or QoS identifiers corresponding to the some of radio bearers of the terminal device 2.

Optionally, the second indication information may be transmitted by using a PDCP control PDU, an RLC control PDU, or an RLC data PDU.

Specifically, the control PDU or the data PDU may be sent through a radio bearer that needs to perform the PDCP data retransmission. Alternatively, the control PDU or the data PDU may carry a QoS flow identifier or a QoS identifier corresponding to a radio bearer that needs to be performed the PDCP data retransmission.

Optionally, the second indication information may also be transmitted by using the MAC CE.

Similarly, for example, the at least one terminal device is a terminal device 1 and a terminal device 2. If all radio bearers of the terminal device 1 and the terminal device 2 need to perform the PDCP data retransmission, one MAC CE may be sent to the terminal device 1, and one MAC CE may be sent to the terminal device 2. A MAC subheader corresponding to each MAC CE carries a specific LCID, which is used to identify a type of a newly added MAC CE. The MAC CE of this type indicates that the PDCP data retransmission needs to be triggered. If some of radio bearers of the terminal device 1 need to perform the PDCP data retransmission, the MAC CE may carry an identifier, or a corresponding QoS flow identifier or QoS identifier of a radio bearer that needs to perform the PDCP data retransmission.

It should be understood that after receiving the second indication information, the terminal device may perform the PDCP data retransmission on a specific radio bearer or perform the PDCP data retransmission on all radio bearers based on the second indication information.

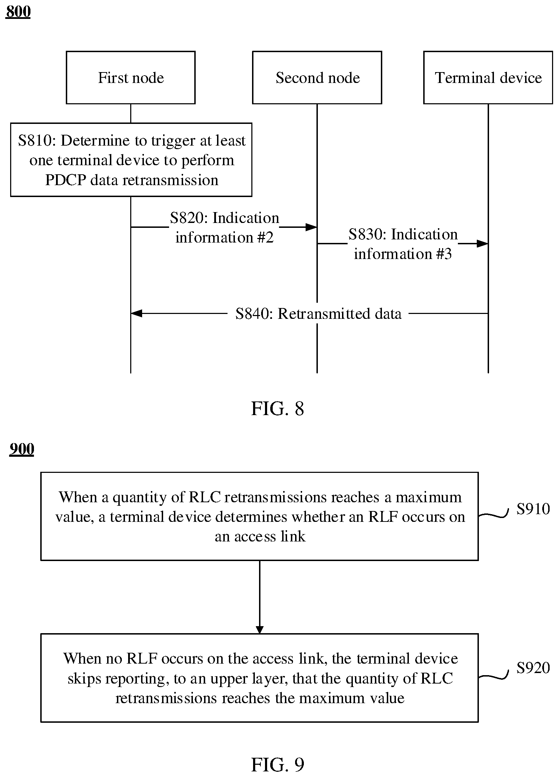

With reference to FIG. 7 and FIG. 8, the following separately describes a case in which the at least one terminal device accesses the first node and a case in which the at least one terminal device accesses the lower-level node of the first node.

FIG. 7 is a schematic flowchart of a communication method 700 according to another embodiment of this application. The method is applicable to a scenario in which the at least one terminal device accesses a first node. FIG. 4 is used as an example. The first node may be an IAB node 4, and the at least one terminal device is a terminal device 3 and a terminal device 4 that access the IAB node 4, or either of the terminal device 3 and the terminal device 4.

S710: The first node determines to trigger the at least one terminal device to perform PDCP data retransmission. The at least one terminal device is some or all of terminal devices that access the first node.

It should be understood that, that the first node determines to trigger the at least one terminal device to perform the PDCP data retransmission is equivalent to that the first node determines the triggering event described in the method 600.

S720: The first node sends an indication information #1 (that is, an example of second indication information) to the at least one terminal device. The indication information #1 is used to trigger the at least one terminal device to perform the PDCP data retransmission.

Optionally, the method may further include the following step:

S730: The at least one terminal device sends retransmitted data.

It should be understood that the retransmitted data may be sent to a donor base station after multi-hop forwarding.

After receiving the indication information #1, the terminal device can recover, by sending the retransmitted data, data lost during backhaul link switching.

FIG. 8 is a schematic flowchart of a communication method 800 according to another embodiment of this application. A case in which the at least one terminal device accesses a lower-level node (that is, a second node) of a first node is described. FIG. 4 is used as an example. The first node may be an IAB node 4, the second node is an IAB node 3, and the at least one terminal device is a terminal device 1 and a terminal device 2 that access the IAB node 3, or either of the terminal device 1 and the terminal device 2.

S810: The first node determines to trigger the at least one terminal device to perform PDCP data retransmission.

It should be understood that, that the first node determines to trigger the at least one terminal device to perform the PDCP data retransmission is equivalent to that the first node determines the triggering event described in the method 600.

S820: The first node sends an indication information #2 (that is, an example of second indication information) to the second node. Correspondingly, the second node receives the indication information #2.

It should be understood that the first node does not perform any processing on the indication information #2 received by the first node, and the first node only forwards the indication information #2.

Optionally, the first node may send the indication information #2 to the second node by using adaptation layer signaling. However, this embodiment of this application is not limited thereto.

S830: The second node sends indication information #3 to the at least one terminal device. The indication information #3 is used to indicate the at least one terminal device to perform the PDCP data retransmission.

It should be understood that the indication information #3 is equal to the indication information #1 in the method 700.

Optionally, the method may further include the following step:

S840: The at least one terminal device sends retransmitted data.

It should be understood that the retransmitted data may be sent to a donor base station after multi-hop forwarding.

This application further provides a communication method. In the communication method, a node that performs backhaul link change triggers a lower-level node of the node to retransmit an adaptation layer PDU. FIG. 4 is used as an example. In other words, the IAB node 4 may trigger the IAB node 3 to retransmit the adaptation layer PDU.

Specifically, FIG. 4 is used as an example. The IAB node 4 may indicate, by using the adaptation layer signaling, the IAB node 3 to retransmit the adaptation layer PDU. After receiving the adaptation layer signaling, the IAB node 3 may retransmit the adaptation layer PDU. Retransmitting the adaptation layer PDU helps recover data lost during backhaul link switching.

FIG. 9 is a schematic flowchart of a communication method 900 according to another embodiment of this application. It should be understood that this application may be applied to an end-to-end ARQ scenario, or may be applied to a hop-by-hop ARQ scenario. In addition, this application may be applied to a scenario in which an adaptation layer is deployed above RLC, or may be applied to a scenario in which an adaptation layer is deployed above MAC.

S910: When a quantity of RLC retransmissions reaches a maximum value, a terminal device determines whether an RLF occurs on an access link.

S920: When no RLF occurs on the access link, the terminal device performs a first operation.

The first operation includes at least one of the following:
(1) Skip report, to an upper layer (an RRC layer), that the quantity of RLC retransmissions reaches the maximum value, or disable a function of triggering the RLF when the quantity of RLC retransmissions reaches the maximum value.
(2) Stop RLC transmission/retransmission.
(3) Reset a quantity RETX_COUNT of RLC retransmissions to 0.
(4) Set a maximum quantity maxRetxThreshold of RLC retransmissions to another preset value. For example, the value may be greater than a currently used maximum quantity of retransmissions.

In a possible implementation of S910, the terminal device may independently determine whether the RLF occurs on the access link. For example, the terminal device may determine, in a manner such as radio link monitoring (RLM) or whether a quantity of random access times reaches a maximum quantity of transmissions, whether the RLF occurs on the access link.

In a possible implementation of S910, the terminal device may determine, by receiving indication information sent by a first node or an access node, that the RLF occurs on a backhaul link, to determine that no RLF occurs on the access link. For example, when the RLF occurs on the first node, a radio link failure notification may be sent, by using adaptation layer signaling, a MAC CE, RLC signaling, or the like, to a node served by the first node. The node served by the first node may be a terminal device or a relay node. If the node is a terminal device, the first node notifies the UE of the indication information by using the MAC CE or the RLC layer signaling. Similarly, if the node served by the first node is a relay node, the first node notifies the relay node of the indication information by using the adaptation layer signaling, the MAC CE, or the RLC layer signaling. The relay node continues to send the RLF notification to the node served by the relay node. Details are not described again. Further, the autonomous determining manner and the manner of receiving the indication information may be used in combination. Similarly, if the first node performs an operation such as a handover operation, activating a backup link, or performing a topology update or a route update, the first node may also send backhaul link change indication information to the node served by the first node. After receiving the indication information, a terminal device can determine that no RLF occurs on the access link, and that is because the operation such as the handover causes a change of the backhaul link, thereby causing a packet loss on the backhaul link, and possibly causing the quantity of RLC retransmissions to reach the maximum value. It may be understood that, if the RLC of the terminal does not reach the maximum quantity of retransmissions but the indication information is received, the first operation may also be performed.

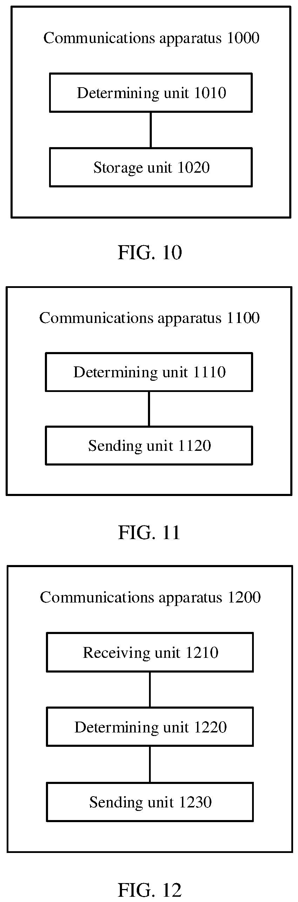

FIG. 10 is a schematic block diagram of a communications apparatus 1000 according to an embodiment of this application. The communications apparatus may be an IAB node, or may be a chip or a circuit, for example, a chip or a circuit disposed on an IAB node. As shown in FIG. 10, the communications apparatus 1000 includes a determining unit 1010 and a storage unit 1020.

The determining unit 1010 is configured to determine that the apparatus is to be handed over from a source node to a target node.

The storage unit 1020 is configured to store data buffered in at least one first entity, and the first entity is a radio link control RLC entity or an adaptation layer entity.

It should be understood that the apparatus 1000 may correspond to the first node in the communication method 500 according to an embodiment of this application, and the apparatus 1000 may include a unit configured to perform the method performed by the first node in the communication method 500 in FIG. 5. In addition, the units in the apparatus 1000 and the foregoing other operations and/or functions are respectively used to implement a corresponding procedure in the communication method 500 in FIG. 5. Specifically, the determining unit 1010 is configured to perform S510 in the method 500, and the storage unit 1020 is configured to perform S520 in the method 500, a specific process in which each unit performs the corresponding steps is described in detail in the method 500. For brevity, details are not described herein again.

FIG. 11 is a schematic block diagram of a communications apparatus 1100 according to an embodiment of this application. The communications apparatus may be an IAB node, or may be a chip applied to an IAB node. As shown in FIG. 11, the communications apparatus 1100 includes a determining unit 1110 and a sending unit 1120.

The determining unit 1110 is configured to determine a triggering event, where the triggering event is used by the communications apparatus to trigger a terminal device that performs data transmission through the communications apparatus to perform packet data convergence protocol PDCP data retransmission, the triggering event includes that the communications apparatus receives first indication information sent by an upper-level node, or the communications apparatus determines to be handed over from a source node to a target node, the first indication information is used to indicate at least one terminal device that accesses the communications apparatus to perform the PDCP data retransmission, the first indication information is radio resource control RRC signaling, adaptation layer signaling, or F1 control plane signaling, and the upper-level node includes a donor base station and an integrated access and backhaul IAB node.

The sending unit 1120 is configured to send second indication information to the at least one terminal device that accesses the communications apparatus or a terminal device that accesses a second node, where the second indication information is used to indicate the at least one terminal device that accesses the communications apparatus or the terminal device that accesses the second node to perform the PDCP data retransmission, and the second node is a lower-level node of the communications apparatus.

It should be understood that the apparatus 1100 may correspond to the first node in the communication methods 600 to 800 according to the embodiments of this application, and the apparatus 1100 may include a unit configured to perform the method performed by the first node in the methods 600 to 800. In addition, the units in the apparatus 1100 and the foregoing other operations and/or functions are respectively used to implement corresponding procedures in the methods 600 to 800. Specifically, the determining unit 1110 is configured to perform S610 in the method 600, S710 in the method 700, and S810 in the method 800, the sending unit 1120 is configured to perform S620 in the method 600, S720 in the method 700, and S820 in the method 800. A specific process of performing the foregoing corresponding steps by each unit is described in detail in the methods 500 to 800. For brevity, details are not described herein again.

FIG. 12 is a schematic block diagram of a communications apparatus 1200 according to an embodiment of this application. The communications apparatus may be a donor base station, or may be a chip applied to a donor base station. As shown in FIG. 12, the communications apparatus 1200 includes a receiving unit 1210, a determining unit 1220, and a sending unit 1230.

The receiving unit 1210 is configured to receive a radio link failure notification of one or more third nodes, where the third node is an upper-level node of a first node.

The determining unit 1220 is configured to determine at least one node device that accesses a network through the first node, where the node device includes at least one of a terminal device that accesses the first node and a terminal device that accesses a second node, and the second node is a lower-level node of the first node.

The sending unit 1230 is configured to send first indication information to the at least one node device, where the first indication information is used by the terminal device that accesses the first node or the terminal device that accesses the second node to perform PDCP data retransmission, and the first indication information is radio resource control RRC signaling, adaptation layer signaling, or F1-AP control plane signaling.

It should be understood that the apparatus 1200 may correspond to the donor gNB in the communication methods 600 to 800 according to the embodiments of this application, and the apparatus 1200 may include a unit configured to perform the method performed by the donor gNB in the methods 600 to 800. In addition, the units in the apparatus 1200 and the foregoing other operations and/or functions are respectively used to implement corresponding procedures in the methods 600 to 800. A specific process of performing the foregoing corresponding steps by each unit is described in detail in the methods 500 to 800. For brevity, details are not described herein again.

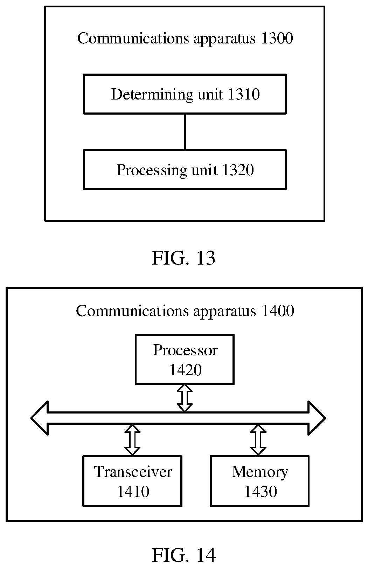

FIG. 13 is a schematic block diagram of a communications apparatus 1300 according to an embodiment of this application. The communications apparatus may be a terminal device, or may be a chip applied to a terminal device. As shown in FIG. 13, the communications apparatus 1300 includes a determining unit 1310 and a processing unit 1320.

The determining unit 1310 is configured to: when a quantity of radio link control RLC retransmissions reaches a maximum value, determine whether a radio link failure RLF occurs on an access link.

The processing unit 1320 is configured to: when no RLF occurs on the access link, skip reporting, to an upper layer, that the quantity of RLC retransmissions reaches the maximum value. It should be understood that the apparatus 1300 may include a unit configured to perform the method 900. In addition, the units in the apparatus 1300 and the foregoing other operations and/or functions are respectively used to implement a corresponding procedure in the method 900. Specifically, the determining unit 1310 is configured to perform S910 in the method 900, and the processing unit 1320 is configured to perform S920 in the method 900, a specific process in which each unit performs the corresponding steps is described in detail in the method 900. For brevity, details are not described herein again.

It should be understood that the units in the foregoing apparatuses may be implemented in a form of software and/or hardware. This is not specifically limited. In other words, the foregoing apparatuses are presented in a form of functional units. The "unit" herein may be an application-specific integrated circuit ASIC, a circuit, a processor and a memory that execute one or more software or firmware programs, an integrated logic circuit, and/or another component that can provide the foregoing functions. Optionally, in a simple embodiment, a person skilled in the art may figure out that the foregoing apparatuses may be in a form shown in FIG. 14.

FIG. 14 is a schematic structural diagram of a communications apparatus 1400 according to an embodiment of this application. As shown in FIG. 14, the communications apparatus 1400 includes a processor 1420.

Optionally, the communications apparatus 1400 further includes a transceiver 1410 and a memory 1430. The transceiver 1410, the processor 1420, and the memory 1430 communicate with each other through an internal connection path, to transfer a control and/or data signal. The transceiver 1410 may be implemented by using a transceiver circuit.

The processor 1420 and the memory 1430 may be integrated into one processing apparatus. The processor 1420 is configured to execute program code stored in the memory 1430 to implement the foregoing functions. During specific implementation, the memory 1430 may also be integrated into the processor 1420, or may be independent of the processor 1420.

In a possible design, the processor 1420, the memory 1430, and the transceiver 1410 may be implemented by using a chip, and the processor 1420, the memory 1430, and the transceiver 1410 may be implemented in a same chip, or may be implemented in different chips, or any two of the functions are combined in one chip for implementation. The memory 1430 may store program code, and the processor 1420 invokes the program code stored in the memory 1430, to implement a corresponding function of any apparatus of the apparatus 1000 to the apparatus 1200.

In an implementation, the processor 1420 is configured to invoke an interface to perform the following actions: determining that the communications apparatus is to be handed over from a source node to a target node; and storing data buffered in at least one first entity, where the first entity is a radio link control RLC entity or an adaptation layer entity.

It should be understood that in this implementation, the communications apparatus 1400 may be further configured to implement functions implemented by the communications apparatus 1000. Specifically, when the processor 1420 invokes and runs the computer program from the memory, the processor 1420 may be configured to execute functions such as determining and storing of the first node in the foregoing methods, and control the transceiver 1410 to complete corresponding information receiving and sending functions. It should be understood that the processor 1420 of the communications apparatus 1400 may correspond to the determining unit 1010 and the storage unit 1020 in the communications apparatus 1000. It should be understood that the communications apparatus 1000 may further include a transceiver unit, and the transceiver 1410 of the communications apparatus 1400 may correspond to the transceiver unit.

In another implementation, the processor 1420 is configured to invoke an interface to perform the following actions: determining a triggering event, where the triggering event is used by the communications apparatus to trigger a terminal device that performs data transmission through the communications apparatus to perform packet data convergence protocol PDCP data retransmission, the triggering event includes that the communications apparatus receives first indication information sent by an upper-level node, or the communications apparatus determines to be handed over from a source node to a target node, the first indication information is used to indicate at least one terminal device that accesses the communications apparatus to perform the PDCP data retransmission, the first indication information is radio resource control RRC signaling, adaptation layer signaling, or F1 control plane signaling, and the upper-level node includes a donor base station and an integrated access and backhaul IAB node; and sending second indication information to the at least one terminal device that accesses the communications apparatus or a terminal device that accesses a second node, where the second indication information is used by the terminal device that accesses the communications apparatus or the terminal device that accesses the second node to perform the PDCP data retransmission, and the second node is a lower-level node of the communications apparatus.

It should be understood that in this implementation, the communications apparatus 1400 may be further configured to implement functions implemented by the communications apparatus 1100. Specifically, when the processor 1420 invokes and runs the computer program from the memory, the processor 1420 may be configured to control the transceiver 1410 to complete corresponding information receiving and sending functions. It should be understood that the transceiver 1410 of the communications apparatus 1400 may correspond to the sending unit 1120 in the communications apparatus 1100. The processor 1420 of the communications apparatus 1400 may correspond to the determining unit 1110 in the communications apparatus 1100.

In another implementation, the processor 1420 is configured to invoke an interface to perform the following actions: receiving a radio link failure notification of one or more third nodes, where the third node is an upper-level node of a first node; determining at least one node device that accesses a network through the first node, where the node device includes at least one of a terminal device that accesses the first node and a terminal device that accesses a second node, and the second node is a lower-level node of the first node; and sending first indication information to the at least one node device, where the first indication information is used by the terminal device that accesses the first node or the terminal device that accesses the second node to perform PDCP data retransmission, and the first indication information is radio resource control RRC signaling, adaptation layer signaling, or F1-AP control plane signaling.

It should be understood that in this implementation, the communications apparatus 1400 may be further configured to implement functions implemented by the communications apparatus 1200. Specifically, when the processor 1420 invokes and runs the computer program from the memory, the processor 1420 may be configured to control the transceiver 1410 to complete corresponding information receiving and sending functions. It should be understood that the transceiver 1410 of the communications apparatus 1400 may correspond to the sending unit 1230 and the receiving unit 1210 in the communications apparatus 1200. The processor 1420 of the communications apparatus 1400 may correspond to the determining unit 1220 in the communications apparatus 1200.

In still another implementation, the processor 1420 is configured to invoke an interface to perform the following actions: when a quantity of radio link control RLC retransmissions reaches a maximum value, determining whether a radio link failure RLF occurs on an access link; and when no RLF occurs on the access link, skipping reporting, to an upper layer, that the quantity of RLC retransmissions reaches the maximum value.

It should be understood that in this implementation, the communications apparatus 1400 may be further configured to implement functions implemented by the communications apparatus 1300. Specifically, when the processor 1420 invokes and runs the computer program from the memory, the processor 1420 may be configured to execute functions such as determining and processing of the terminal device in the foregoing methods, and control the transceiver 1410 to complete corresponding information receiving and sending functions. It should be understood that the processor 1420 of the communications apparatus 1400 may correspond to the determining unit 1310 and the processing unit 1320 in the communications apparatus 1300. It should be understood that the communications apparatus 1300 may further include a transceiver unit, and the transceiver 1410 of the communications apparatus 1400 may correspond to the transceiver unit.

Optionally, the communications apparatus 1400 further includes a transceiver 1410 and a memory 1430. The transceiver 1410, the processor 1420, and the memory 1430 communicate with each other through an internal connection path, to transfer a control and/or data signal. The memory 1430 is configured to store a computer program, and the processor 1420 is configured to invoke the computer program from the memory 1430 and run the computer program, to control the transceiver 1410 to receive and send a signal.

In the embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment.

The embodiments of this application may be applied to a processor, or implemented by a processor. The processor may be an integrated circuit chip and has a signal processing capability. In an implementation process, steps in the foregoing method embodiments may be implemented by using a hardware integrated logic circuit in the processor or an instruction in a form of software. The foregoing processor may be a central processing unit (CPU), the processor may further be another general purpose processor, a digital signal processor (DSP), an application-specific integrated circuit (ASIC), a field programmable gate array (FPGA) or another programmable logic device, a discrete gate or transistor logic device, or a discrete hardware component. The methods, the steps, and logic block diagrams that are disclosed in the embodiments of this application may be implemented or performed. The general purpose processor may be a microprocessor, or the processor may be any conventional processor or the like. Steps of the methods disclosed with reference to the embodiments of this application may be directly executed and accomplished by using a hardware decoding processor, or may be executed and accomplished by using a combination of hardware and software in the decoding processor. A software unit may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing method in combination with hardware of the processor.

It should be further understood that, in the embodiments of this application, the memory may be a volatile memory or a nonvolatile memory, or may include both a volatile memory and a nonvolatile memory. The nonvolatile memory may be a read-only memory (ROM), a programmable read-only memory (PROM), an erasable programmable read-only memory (EPROM), an electrically erasable programmable read-only memory (EEPROM), or a flash memory. The volatile memory may be a random access memory (RAM), used as an external cache. Through example but not limitative description, many forms of RAMs may be used, for example, a static random access memory (SRAM), a dynamic random access memory (DRAM), a synchronous dynamic random access memory (SDRAM), a double data rate synchronous dynamic random access memory (DDR SDRAM), an enhanced synchronous dynamic random access memory (ESDRAM), a synchlink dynamic random access memory (SLDRAM), and a direct rambus random access memory (DRRAM). It should be noted that memories in the system and method described in this specification include but are not limited to the memories and memories of any other proper types.

In this application, that A corresponds to B may be understood as that A is associated with B, or A is associated with B.

It should be understood that division of manners, cases, types, and embodiments in the embodiments of this application are merely for ease of description, but should not constitute any special limitation, and features in various manners, types, cases, and embodiments may be combined when there is no contradiction.

It should be further understood that "first" and "second" in the embodiments of this application are merely intended to distinguish, and shall not constitute any limitation on this application.

It should be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification usually indicates an "or" relationship between the associated objects.

Aperson of ordinary skill in the art may be aware that units and algorithm steps in the examples described with reference to the embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions of each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, function units in the embodiments of this application may be integrated into one processing unit, or each of the units may exist alone physically, or two or more units are integrated into one unit.

When the functions are implemented in a form of a software function unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of this application. The storage medium includes any medium that can store program code such as a USB flash drive, a removable hard disk, a read-only memory (ROM), a random access memory (RAM), a magnetic disk, or an optical disc.

It may be understood that numerical symbols involved in the embodiments of this application are differentiated merely for ease of description, but are not used to limit the scope of the embodiments of this application. Sequence numbers of the foregoing processes do not mean execution sequences. The execution sequences of the processes should be determined according to functions and internal logic of the processes.

## Claims

1. A communication method, wherein the communication method is applied to a relay system, the relay system comprises a first node, a source node, and a target node, the source node provides a service for the first node, and the method comprises:
determining, by the first node, to be handed over from the source node to the target node; and
storing, by the first node, data buffered in at least one first entity, wherein the first entity is a radio link control RLC entity or an adaptation layer entity.

2. The method according to claim 1, wherein determining, by the first node, that a parent node of the first node is to be handed over from the source node to the target node comprises:
when receiving a handover command or detecting a radio link failure, RLF, determining, by the first node, that the parent node of the first node is to be handed over from the source node to the target node, wherein the handover command is used to indicate the first node to be handed over to the target node.

3. The method according to claim 1 or 2, wherein the method further comprises:
re-establishing, resetting, or releasing, by the first node, a lower-layer protocol entity of the first entity.

4. The method according to any one of claims 1 to 3, wherein before the storing, by the first node, data buffered in at least one first entity, the method further comprises:
receiving, by the first node, indication information, wherein the indication information is used to indicate the first node to store the data buffered in the at least one first entity.

5. A communication method, comprising:
determining, by a first node, a triggering event, wherein the triggering event is used by the first node to trigger a terminal device that performs data transmission through the first node to perform packet data convergence protocol, PDCP, data retransmission, the triggering event comprises that the first node receives a first indication information sent by an upper-level node, or the first node determines to be handed over from a source node to a target node, wherein the first indication information is used to indicate at least one terminal device that accesses the first node to perform the PDCP data retransmission, the first indication information is radio resource control RRC signaling, adaptation layer signaling, or F1-AP control plane signaling, and the upper-level node comprises a donor base station and an integrated access and backhaul IAB node; and
sending, by the first node, a second indication information to the at least one terminal device that accesses the first node or a second node, wherein the second indication information is used to indicate the at least one terminal device that accesses the first node or the terminal device that accesses the second node to perform the PDCP data retransmission, and the second node is a lower-level node of the first node.

6. The method according to claim 5, wherein the method further comprises:
receiving, by the first node, retransmitted data that is from the at least one terminal device that accesses the first node or the terminal device that accesses the second node.

7. The method according to claim 5 or 6, wherein the first indication information comprises at least one of the following information:
an identifier of the at least one terminal device;
an identifier of at least one radio bearer of the at least one terminal device; or
at least one quality of service QoS flow identifier or QoS identifier of the at least one terminal device.

8. The method according to any one of claims 5 to 7, wherein the second indication information is sent by using a packet data convergence protocol PDCP control protocol data unit PDU, a radio link control RLC control PDU, an RLC data PDU, a media access control control element MAC CE, or adaptation layer control signaling.

9. The method according to any one of claims 5 to 8, wherein the second indication information comprises at least one of the following information:
identifier of the at least one terminal device;
identifier of at least one radio bearer of the at least one terminal device;
at least one quality of service QoS flow identifier or QoS identifier of the at least one terminal device;
an identifier of the first node;
an indication of the PDCP data retransmission; or
an identifier of the lower-level node of the first node.

10. A communication method, comprising:
receiving, by a donor base station, a radio link failure notification of one or more third nodes, wherein the third node is an upper-level node of a first node;
determining, by the donor base station, at least one node device that accesses a network through the first node, wherein the node device comprises at least one of a terminal device that accesses the first node or a second node, and the second node is a lower-level node of the first node; and
sending, by the donor base station, first indication information to the at least one node device, wherein the first indication information is used by the terminal device that accesses the first node or the terminal device that accesses the second node to perform PDCP data retransmission, and the first indication information is radio resource control RRC signaling, adaptation layer signaling, or F1-AP control plane signaling.

11. The method according to claim 10, wherein the method further comprises:
receiving, by the donor base station, retransmitted data that is from the terminal device that accesses the first node or the terminal device that accesses the second node.

12. The method according to claim 10 or 11, wherein the at least one node device that accesses the network through the first node comprises a node device that accesses the network through the first node after multi-hop transmission.

13. The method according to any one of claims 10 to 12, wherein the first indication information is sent by the donor base station to the first node, and the first node sends an indication of the PDCP data retransmission to the terminal device that accesses the first node.

14. The method according to any one of claims 10 to 13, wherein the first indication information is sent by the donor base station to the second node, and the second node sends the indication of the PDCP data retransmission to the terminal device that accesses the second node.

15. The method according to any one of claims 10 to 12, wherein the first indication information is sent by the donor base station to the terminal device that accesses the first node or the second node, and the first indication information is used to indicate the terminal device that accesses the first node or the terminal device that accesses the second node to perform the PDCP data retransmission.

16. The method according to any one of claims 10 to 15, wherein the first indication information comprises at least one of the following information:
identifier of the at least one terminal device;
identifier of at least one radio bearer of the at least one terminal device;
at least one quality of service QoS flow identifier or QoS identifier of the at least one terminal device;
an identifier of the first node;
an identifier of the second node; or
the indication of the PDCP data retransmission.

17. A PDCP retransmission method, comprising:
when a quantity of radio link control RLC retransmissions reaches a maximum value, determining, by a terminal device, whether a radio link failure RLF occurs on an access link; and
when no RLF occurs on the access link, skipping reporting, by the terminal device, to an upper layer, that the quantity of RLC retransmissions reaches the maximum value.

18. The method according to claim 17, wherein the determining, by a terminal device, whether a radio link failure RLF occurs on an access link comprises:
receiving, by the terminal device, indication information, wherein the indication information is used to indicate that the RLF occurs on a backhaul link or a backhaul link changes; and
determining, by the terminal device based on the indication information, that no RLF occurs on the access link.

19. A communications apparatus, wherein the apparatus is applied to a relay system, the relay system comprises the apparatus, a source node, and a target node, the source node provides a service for the apparatus, and the apparatus comprises:
a determining unit, configured to determine that the apparatus is to be handed over from the source node to the target node; and
a storage unit, configured to store data buffered in at least one first entity, wherein the first entity is a radio link control RLC entity or an adaptation layer entity.

20. The apparatus according to claim 19, wherein the determining unit is further configured to:
when receiving a handover command or detecting a radio link failure RLF, determine that a parent node of the apparatus is to be handed over from the source node to the target node, wherein the handover command is used to indicate the apparatus to be handed over to the target node.

21. The apparatus according to claim 19 or 20, wherein the apparatus further comprises:
a processing unit, configured to re-establish, reset, or release a lower-layer protocol entity of the first entity.

22. The apparatus according to any one of claims 19 to 21, wherein the apparatus further comprises:
a receiving unit, configured to receive indication information, wherein the indication information is used to indicate the apparatus to store the data buffered in the at least one first entity.

23. A communications apparatus, comprising:
a determining unit, configured to determine a triggering event, wherein the triggering event is used by the apparatus to trigger a terminal device that performs data transmission through the apparatus to perform packet data convergence protocol PDCP data retransmission, the triggering event comprises that the apparatus receives first indication information sent by an upper-level node, or the apparatus determines to be handed over from a source node to a target node, the first indication information is used to indicate at least one terminal device that accesses the apparatus to perform the PDCP data retransmission, the first indication information is radio resource control RRC signaling, adaptation layer signaling, or F1-AP control plane signaling, and the upper-level node comprises a donor base station and an integrated access and backhaul IAB node; and
a sending unit, configured to send second indication information to the at least one terminal device that accesses the apparatus or a second node, wherein the second indication information is used to indicate the at least one terminal device that accesses the apparatus or the terminal device that accesses the second node to perform the PDCP data retransmission, and the second node is a lower-level node of the apparatus.

24. The apparatus according to claim 23, wherein the apparatus further comprises:
a receiving unit, configured to receive retransmitted data that is from the at least one terminal device that accesses the apparatus or the terminal device that accesses the second node.

25. The apparatus according to claim 23 or 24, wherein the first indication information comprises at least one of the following information:
identifier of the at least one terminal device;
identifier of at least one radio bearer of the at least one terminal device; or
at least one quality of service QoS flow identifier or QoS identifier of the at least one terminal device.

26. The apparatus according to any one of claims 23 to 25, wherein the second indication information is sent by using a packet data convergence protocol PDCP control protocol data unit PDU, a radio link control RLC control PDU, an RLC data PDU, a media access control control element MAC CE, or adaptation layer control signaling.

27. The apparatus according to any one of claims 23 to 26, wherein the second indication information comprises at least one of the following information:
an identifier of the at least one terminal device;
an identifier of at least one radio bearer of the at least one terminal device; and
at least one quality of service QoS flow identifier or QoS identifier of the at least one terminal device;
an identifier of the apparatus;
an indication of the PDCP data retransmission; and
an identifier of the lower-level node of the apparatus.

28. A communications apparatus, comprising:
a receiving unit, configured to receive a radio link failure notification of one or more third nodes, wherein the third node is an upper-level node of a first node;
a determining unit, configured to determine at least one node device that accesses a network through the first node, wherein the node device comprises at least one of a terminal device that accesses the first node or a second node, and the second node is a lower-level node of the first node; and
a sending unit, configured to send first indication information to the at least one node device, wherein the first indication information is used by the terminal device that accesses the first node or the terminal device that accesses the second node to perform PDCP data retransmission, and the first indication information is radio resource control RRC signaling, adaptation layer signaling, or F1-AP control plane signaling.

29. The apparatus according to claim 28, wherein the receiving unit is further configured to:
receive retransmitted data that is from the terminal device that accesses the first node or the terminal device that accesses the second node.

30. The apparatus according to claim 28 or 29, wherein the at least one node device that accesses the network through the first node comprises a node device that accesses the network through the first node after multi-hop transmission.

31. The apparatus according to any one of claims 28 to 30, wherein the first indication information is sent by the apparatus to the first node, and the first node sends an indication of the PDCP data retransmission to the terminal device that accesses the first node.

32. The apparatus according to any one of claims 28 to 31, wherein the first indication information is sent by the apparatus to the second node, and the second node sends the indication of the PDCP data retransmission to the terminal device that accesses the second node.

33. The apparatus according to any one of claims 28 to 30, wherein the first indication information is sent by the apparatus to the terminal device that accesses the first node or the second node, and the first indication information is used to indicate the terminal device that accesses the first node or the terminal device that accesses the second node to perform the PDCP data retransmission.

34. The apparatus according to any one of claims 28 to 33, wherein the first indication information comprises at least one of the following information:
identifier of at least one terminal device;
identifier of at least one radio bearer of the at least one terminal device;
at least one quality of service QoS flow identifier or QoS identifier of the at least one terminal device;
an identifier of the first node;
an identifier of the second node; or
the indication of the PDCP data retransmission.

35. A communications apparatus, comprising:
a determining unit, configured to: when a quantity of radio link control RLC retransmissions reaches a maximum value, determine whether a radio link failure RLF occurs on an access link; and
a processing unit, configured to: when no RLF occurs on the access link, skip reporting, to an upper layer, that the quantity of RLC retransmissions reaches the maximum value.

36. The apparatus according to claim 35, wherein the apparatus further comprises:
a receiving unit, configured to receive indication information, wherein the indication information is used to indicate that the RLF occurs on a backhaul link or a backhaul link changes; and
the determining unit is specifically configured to:
determine, based on the indication information, that no RLF occurs on the access link.

37. A communications apparatus, wherein the apparatus is applied to a relay system, the relay system comprises the apparatus, a source node, and a target node, the source node provides a service for the apparatus, and the apparatus comprises:
a processor, configured to determine that the apparatus is to be handed over from the source node to the target node, wherein
the processor is further configured to store data buffered in at least one first entity, wherein the first entity is a radio link control RLC entity or an adaptation layer entity.

38. The apparatus according to claim 37, wherein the apparatus further comprises a transceiver; and
the processor is further configured to:
when the transceiver receives a handover command or detects a radio link failure RLF, determine that a parent node of the apparatus is to be handed over from the source node to the target node, wherein the handover command is used to indicate the apparatus to be handed over to the target node.

39. The apparatus according to claim 37 or 38, wherein the processor is further configured to:
re-establish, reset, or release a lower-layer protocol entity of the first entity.

40. The apparatus according to any one of claims 37 to 39, wherein:
the transceiver, further configured to receive indication information, wherein the indication information is used to indicate the apparatus to store the data buffered in the at least one first entity.

41. A communications apparatus, comprising:
a processor, configured to determine a triggering event, wherein the triggering event is used by the apparatus to trigger a terminal device that performs data transmission through the apparatus to perform packet data convergence protocol PDCP data retransmission, the triggering event comprises that the apparatus receives first indication information sent by an upper-level node, or the apparatus determines to be handed over from a source node to a target node, the first indication information is used to indicate at least one terminal device that accesses the apparatus to perform the PDCP data retransmission, the first indication information is radio resource control RRC signaling, adaptation layer signaling, or F1-AP control plane signaling, and the upper-level node comprises a donor base station and an integrated access and backhaul IAB node; and
a transceiver, configured to send second indication information to the at least one terminal device that accesses the apparatus or a second node, wherein the second indication information is used to indicate the at least one terminal device that accesses the apparatus or the terminal device that accesses the second node to perform the PDCP data retransmission, and the second node is a lower-level node of the apparatus.

42. The apparatus according to claim 41, wherein the transceiver is further configured to:
receive retransmitted data that is from the at least one terminal device that accesses the apparatus or the terminal device that accesses the second node.

43. The apparatus according to claim 41 or 42, wherein the first indication information comprises at least one of the following information:
an identifier of the at least one terminal device;
an identifier of at least one radio bearer of the at least one terminal device; and
at least one quality of service QoS flow identifier or QoS identifier of the at least one terminal device.

44. The apparatus according to any one of claims 41 to 43, wherein the second indication information is sent by using a packet data convergence protocol PDCP control protocol data unit PDU, a radio link control RLC control PDU, an RLC data PDU, a media access control control element MAC CE, or adaptation layer control signaling.

45. The apparatus according to any one of claims 41 to 44, wherein the second indication information comprises at least one of the following information:
identifier of the at least one terminal device;
identifier of at least one radio bearer of the at least one terminal device; and
at least one quality of service QoS flow identifier or QoS identifier of the at least one terminal device;
an identifier of the apparatus;
an indication of the PDCP data retransmission; or
an identifier of the lower-level node of the apparatus.

46. A communications apparatus, comprising:
a transceiver, configured to receive a radio link failure notification of one or more third nodes, wherein the third node is an upper-level node of a first node; and
a processor, configured to determine at least one node device that accesses a network through the first node, wherein the node device comprises at least one of a terminal device that accesses the first node or a second node, and the second node is a lower-level node of the first node, wherein
the transceiver is further configured to send first indication information to the at least one node device, wherein the first indication information is used by the terminal device that accesses the first node or the terminal device that accesses the second node to perform PDCP data retransmission, and the first indication information is radio resource control RRC signaling, adaptation layer signaling, or F1-AP control plane signaling.

47. The apparatus according to claim 46, wherein the transceiver is further configured to:
receive retransmitted data that is from the terminal device that accesses the first node or the terminal device that accesses the second node.

48. The apparatus according to claim 46 or 47, wherein the at least one node device that accesses the network through the first node comprises a node device that accesses the network through the first node after multi-hop transmission.

49. The apparatus according to any one of claims 46 to 48, wherein the first indication information is sent by the apparatus to the first node, and the first node sends an indication of the PDCP data retransmission to the terminal device that accesses the first node.

50. The apparatus according to any one of claims 46 to 49, wherein the first indication information is sent by the apparatus to the second node, and the second node sends the indication of the PDCP data retransmission to the terminal device that accesses the second node.

51. The apparatus according to any one of claims 46 to 48, wherein the first indication information is sent by the apparatus to the terminal device that accesses the first node or the second node, and the first indication information is used to indicate the terminal device that accesses the first node or the terminal device that accesses the second node to perform the PDCP data retransmission.

52. The apparatus according to any one of claims 46 to 51, wherein the first indication information comprises at least one of the following information:
identifier of at least one terminal device;
identifier of at least one radio bearer of the at least one terminal device;
at least one quality of service QoS flow identifier or QoS identifier of the at least one terminal device;
an identifier of the first node;
an identifier of the second node; or
the indication of the PDCP data retransmission.

53. A communications apparatus, comprising:
a processor, configured to: when a quantity of radio link control RLC retransmissions reaches a maximum value, determine whether a radio link failure RLF occurs on an access link, wherein
the processor is further configured to: when no RLF occurs on the access link, skip reporting, to an upper layer, that the quantity of RLC retransmissions reaches the maximum value.

54. The apparatus according to claim 53, wherein the apparatus further comprises:
a transceiver, configured to receive indication information, wherein the indication information is used to indicate that the RLF occurs on a backhaul link or a backhaul link changes; and
the processor is specifically configured to:
determine, based on the indication information, that no RLF occurs on the access link.

55. A communications apparatus, comprising a processor, wherein the processor is connected to a memory, the memory is configured to store a computer program, and the processor is configured to execute the computer program stored in the memory, so that the apparatus performs the method according to any one of claims 1 to 18.

56. A communications apparatus, comprising: a memory and a processor, wherein the memory stores code and data, the memory is coupled to the processor, and the processor runs the code in the memory, so that the apparatus performs the method according to any one of claims 1 to 4, or performs the method according to any one of claims 5 to 9, or performs the method according to any one of claims 10 to 16, or performs the method according to claim 17 or 18.

57. A computer-readable storage medium, storing a computer program, wherein when the computer program is executed, the method according to any one of claims 1 to 4 is implemented, or the method according to any one of claims 5 to 9 is implemented, or the method according to any one of claims 10 to 16 is implemented, or the method according to claim 17 or 18 is implemented.

58. A computer program product, comprising a computer program, wherein when the computer program is run, the computer is enabled to perform the method according to any one of claims 1 to 4, or perform the method according to any one of claims 5 to 9, or perform the method according to any one of claims 10 to 16, or perform the method according to claim 17 or 18.
